# EUROPEAN PATENT APPLICATION

(11) **EP 1 065 095 A2**
(43) Date of publication of application: **03.01.2001**
(21) Application number: 00112663.0
(22) Date of filing: 15.06.2000
(51) Int. Cl.: B60N 2/36

(54) **Support for the rear seat-back of a motor vehicle**

(30) Priority: 01.07.1999 IT TO990126 U
(71) Applicant: FIAT AUTO S.p.A., 10135 Torino (IT)
(72) Inventor: Rovero, Giuseppe, 10134 Torino (IT); Mazzucco, Gino, 10095 Grugliasco (TO) (IT)
(74) Representative: Di Francesco, Gianni

(57) **Abstract**

Description of a central support for the axis of rotation of a split and collapsible seat back (1) of a motor vehicle, consisting of a basis (12) that can be fixed to the body of the motor vehicle and of an upright rod (9) integral to the body itself, on which there is the seat, open and accessible from above, for the axis of rotation (6) of the parts of the seat back (1); the seat can be closed by means of an overturning cap (14).

## Description

The present invention refers to a support for the split seat back of the rear seat of a motor vehicle.

In order to increase the possibilities and versatility of loading, the rear seat in the present motor vehicle is split in two parts. A first part counts for the 70% approximately of the entire length, while the second part counts for the remaining 30%. Both parts are collapsible so that loading is easy thanks to the larger space available.

In order to be collapsible, the seat back must be hinged to the body of the vehicle. Being the side wall of the body available for the anchorage, there is no major problem when the seat back is hinged laterally.

On the contrary, a support to anchor the axis of rotation of the seat back must be provided when the seat back is hinged centrally.

It is an object of the present invention to provide a support the fixing characteristics of which allow the assembly to be automatic and the axis of rotation of the seat back to be fixed quickly so that the assembly is quite simpler.

Said object is achieved by means of the present invention intended to provide a central support for the axis of rotation of the split and collapsible seat back of the rear seat of a motor vehicle presenting the characteristics set forth in claim 1.

Further advantages and characteristics will become clear through the following description which refers to the appended drawings provided as non-restrictive example and in which:

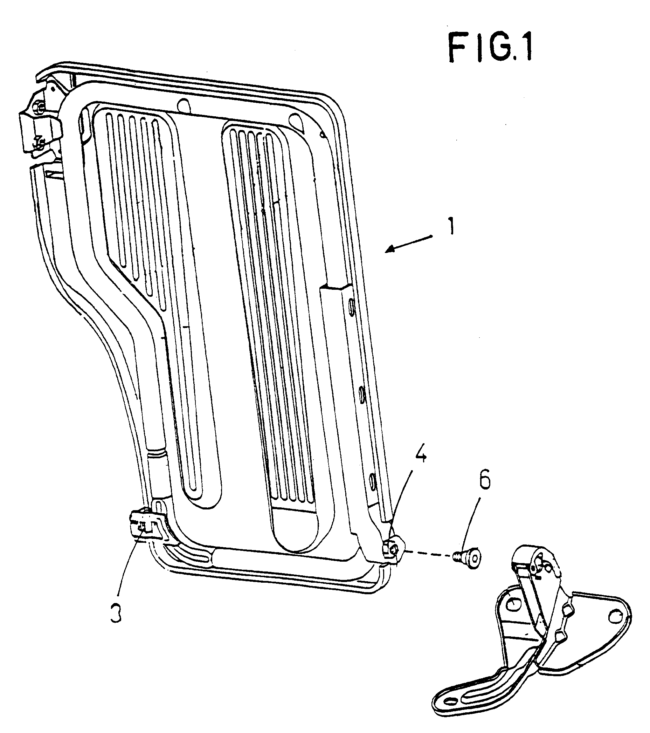

- figure 1 is a view of part of the frame of the seat back placed near the support according to the invention;

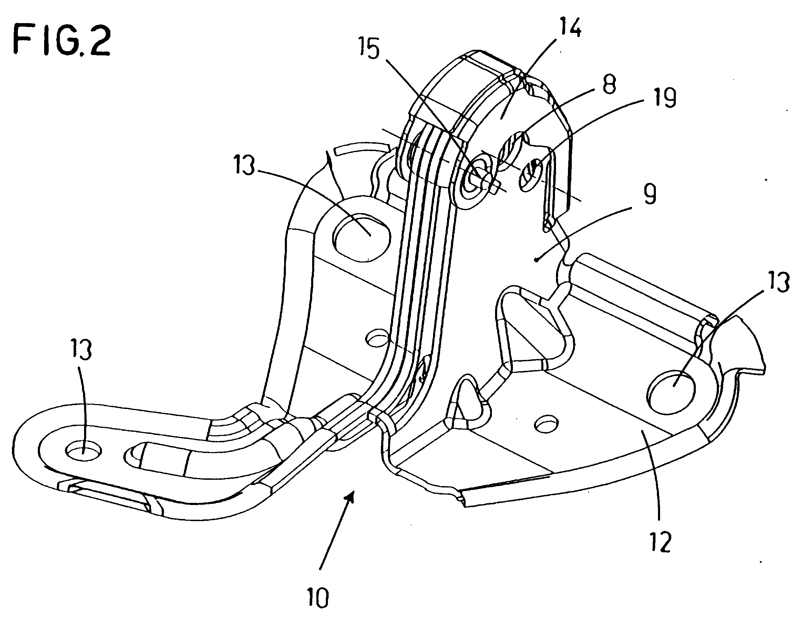

- figure 2 is a perspective view of the support according to the invention, and
- figure 3 is a side view, partly transparent, of the support of figure 2.

With reference to the figures, reference number 1 indicates one of the two parts of the split and collapsible seat back of the rear seat in a motor vehicle, said part being hinged by one side at point 3 to the side of the body (not shown) of a motor vehicle.

The bottom end of the side of the seat back facing the central part of the vehicle, is provided with a seat 4 intended to fix the axis of rotation of the seat back, which, in this case, consists of a screw 6 with rounded head with an enlarged diameter.

The screw 6 rotates into a seat 9 shaped as an hollow open upwards, said seat being made in the upright rod 9 of a central support 10, consisting of two sheets facing each other. Said support is provided with a bearing base 12, which is integral with the upright rod, and which is fixed to the body by means of screws (not shown), inserted in their respective seats 13.

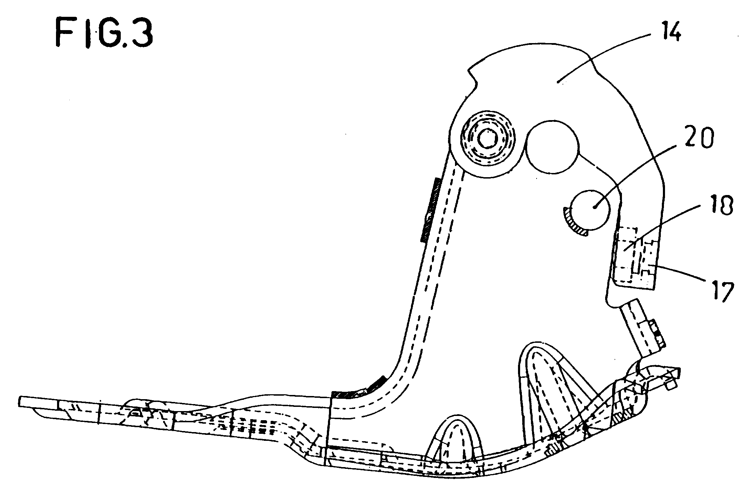

An overturning cap 14 is hinged at 15 to the upright rod 9, so that when it is lifted and rotated, it enables the screw 6 to reach the seat 8. At the end which is opposite to the hinged one, the cap 14 presents a seat 17 adapted to allow the passage of a bolt (not shown), which being screwed down into the nut 18 soldered to the upright rod, fasten it in its closed position so that the screw 6 is prevented from coming out. The upright rod 8 is also provided with a through seat 19 intended to allow the insertion of a pivot 20 (figure 3) which stops the traverse of the seat back 1.

Since the cap can be lifted by means of rotation, the assembly of the seat back is very easy and quick, as well as easy and quick is its locking on the seat 8, realised by the bolt being automatically screwed into the nut 18. The width of the upright rod 9 will be calculated in order to allow the insertion of two screws 6 with their head facing each other, so that it is possible to fix in rotation both parts of the collapsible seat back. The rounded head of the screw, allows the screw to become engaged into the seat 8 by means of the protruding edge of the stem and to be kept in place by the cap 14 so that it cannot come out. The screws 6 will be preferably coated with antifriction and deadening material in order to avoid noises inside the vehicle.

## Claims

1. Central support for the axis of rotation (6) of a split and collapsible seat back (1) of a motor vehicle, consisting of a basis (12) that can be fixed to the body of the motor vehicle and of an upright rod (9) integral to the body itself, characterised in that the upright rod presents a seat for the axis of rotation (6) of the parts of the seat back (1); said seat being open and accessible from above; an overturning cap (14) being hinged (15) on said upright rod (9) being possible to close said cap on said seat in order to lock inside it the axis of rotation (6) of the parts of the seat back.

2. Support as claimed in claim 1, characterised in that the free end of said cap (14) is provided with a seat (17) to lock it in a closed position on the upright rod (9) by means of a bolt that can be screwed automatically.

3. Support as claimed in claim 1, characterised in that the upright rod (9) is provided with a nut (18) for the screwing of the bolt fixing the cap (14).

4. Support as claimed in claim 1, characterised in that the axis of rotation is a screw (6) with rounded head which is screwed on said seat back (1).

5. Support as claimed in claim 1 and 4, characterised in that the width of the upright rod is such that it can house two screws (6) placed with their heads facing in the seat (8).

6. Support as claimed in claim 1, characterised in that the upright rod (9) is provided with a seat (19) to stop (20) the traverse of the seat back.
